(19) **Europäisches Patentamt / European Patent Office / Office européen des brevets**

(11) **EP 1 352 484 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(21) Anmeldenummer: **01991698.0**

(22) Anmeldetag: **27.12.2001**

(51) Int Cl.:
**H04B 7/06** (2006.01)

(86) Internationale Anmeldenummer:
**PCT/DE2001/004932**

(87) Internationale Veröffentlichungsnummer:
**WO 2002/056501 (18.07.2002 Gazette 2002/29)**

(54) **VERFAHREN ZUR FEEDBACK-ÜBERTRAGUNG IN EINEM FUNK-KOMMUNIKATIONSSYSTEM UND STATIONEN FÜR EIN FUNK-KOMMUNIKATIONSSYSTEM**

METHOD FOR FEEDBACK TRANSMISSION IN A RADIO COMMUNICATIONS SYSTEM, AND STATIONS FOR A RADIO COMMUNICATIONS SYSTEM

PROCEDE DE TRANSFERT EN RETOUR DANS UN SYSTEME DE RADIOCOMMUNICATION, ET STATIONS POUR UN SYSTEME DE RADIOCOMMUNICATION

(84) Benannte Vertragsstaaten:
**DE FR GB**

(30) Priorität: **15.01.2001 DE 10101555**

(43) Veröffentlichungstag der Anmeldung:
**15.10.2003 Patentblatt 2003/42**

(73) Patentinhaber: **SIEMENS AKTIENGESELLSCHAFT 80333 München (DE)**

(72) Erfinder:
• **LOBINGER, Andreas 83714 Miesbach (DE)**
• **RAAF, Bernhard 81475 München (DE)**
• **WIEDMANN, Ralf 81369 München (DE)**

(56) Entgegenhaltungen:
EP-A- 1 143 636     WO-A-00/72464
US-A- 5 634 199

• **SAMSUNG AND SEOUL NATIONAL UNIVERSITY: "Preliminary Version of Algorithm and Simulation Results for Tx Diversity with more than 2 Tx Antennas" TSGR1#14(00)-0882, [Online] 4. - 7. Juli 2000, Seiten 1-4, XP002197993 Gefunden im Internet: <URL:http://www.3gpp.org/ftp/tsg_ran/WG1_R L1/TSGR1_14/Docs/ PDFs/R1-00-0882.pdf>; [gefunden am 2002-05-03] in der Anmeldung erwähnt**
• **HOTTINEN A ET AL: "Transmit diversity using filtered feedback weights in the FDD/WCDMA system" BROADBAND COMMUNICATIONS, 2000. PROCEEDINGS. 2000 INTERNATIONAL ZURICH SEMINAR ON ZURICH, SWITZERLAND 15-17 FEB. 2000, PISCATAWAY, NJ, USA,IEEE, US, 15. Februar 2000 (2000-02-15), Seiten 15-21, XP010376432 ISBN: 0-7803-5977-1**

## Beschreibung

Die vorliegende Erfindung betrifft ein Verfahren zur Übertragung von Rückkopplungsinformation für die Strahlformung in einem Funk-Kommunikationssystem mit einer Basisstation, deren zugeordnete Antenneneinrichtung mehrere Antennenelemente aufweist, so dass eine räumliche Auflösung bei der Strahlformung möglich ist, und einer Mehrzahl von Teilnehmerstationen. Sie betrifft ferner eine Teilnehmerstation und eine Basisstation, die zur Anwendung des Verfahrens geeignet sind.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, daß ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (fast fading) führen.

Aus DE 197 12 549 A1 ist bekannt, intelligente Antennen (smart antennas), d. h. Antennenanordnungen mit mehreren Antennenelementen, zu nutzen, um die Übertragungskapazität in Aufwärtsrichtung zu erhöhen. Diese ermöglichen eine gezielte Ausrichtung des Antennengains in eine Richtung, aus der das Uplinksignal kommt.

Aus A.J.Paulraj, C.B.Papadias, "Space-time processing for wireless communications", IEEE Signal Processing Magazine, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation, treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2$^{nd}$ European Personal Mobile Communications Conference (EPMCC), Bonn, Deutschland, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt wird. Mit jeder Änderung der Eigenschaften des Übertragungskanals muß die gesamte aufwendige iterative Berechnung wiederholt werden.

Aus DE 198 03 188 A ist ein Verfahren bekannt, wobei eine räumliche Kovarianzmatrix für eine Verbindung von einer Basisstation zu einer Teilnehmerstation bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt. Intrazell-Interferenzen werden aufgrund der Verwendung von Joint-Detection, beispielsweise in den Endgeräten, in die Strahlformung nicht einbezogen und eine Verfälschung der empfangenen Signale durch Interzell-Interferenzen wird vernachlässigt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg. Dadurch kann jedoch nicht verhindert werden, daß Interferenzen auf diesem Übertragungsweg kurzfristig zu Signalauslöschungen und somit zu Unterbrechungen der Übertragung führen können.

Die Empfehlungen des 3GPP (3$^{rd}$ Generation Partnership Project, http://www.3gpp.org) sehen deshalb Verfahren vor, bei denen die Teilnehmerstation eine kurzfristige Kanalimpulsantwort $h_m$ des Kanals vom m-ten Antennenelement zur Teilnehmerstation schätzt und Gewichtungsfaktoren $w_m$ berechnet, mit denen das Sendesignal vor Abstrahlung durch das m-te Antennenelement gewichtet werden soll. Entsprechende Konzepte sind auch in M. Raitola, A. Hottinen und R. Wichmann, "Transmission diversity in wideband CDMA", erschienen in Proc. 49$^{th}$ IEEE Vehicular Technology Conf. Spring (VTC '99 Spring), S. 1545-1549, Houston, Texas 1999, behandelt.

Ein schwerwiegendes Problem dieser Vorgehensweise ist, daß der von der Teilnehmerstation abgeschätzte Vektor der Gewichtungsfaktoren an die Basisstation übertragen werden muß, und daß hierfür gemäß den Empfehlungen des 3GPP nur eine geringe Bandbreite von einem Bit pro Zeitschlitz (slot) zur Verfügung steht. Die Vektoren können daher nur grob quantisiert übertragen werden. Wenn sich der Kanal schnell ändert und die Gewichtungen von einem Zeitschlitz zum anderen aktualisiert werden müssen, sind lediglich zwei verschiedene relative Phasenlagen der Antennenelemente einstellbar. Wenn der Kanal sich langsamer ändert und z. B. vier Zeitschlitze zum Übertragen des Vektors zur Verfügung stehen, sind immerhin 16 verschiedene Werte des Vektors darstellbar.

Die bekannten Konzepte stoßen jedoch an ihre Grenzen, wenn die Zahl der Antennenelemente der Basisstation größer als zwei ist, denn die zum Übertragen des Vektors benötigte Bandbreite nimmt mit dessen Komponentenzahl, d. h. mit der Zahl der Antennenelemente zu. Das bedeutet: eine große Zahl von Antennenelementen wäre zwar einerseits wünschenswert, um den Sendestrahl möglichst genau ausrichten zu können, andererseits kann infolge der begrenzten verfügbaren Bandbreite der Gewichtungsvektor nicht so oft aktualisiert werden, wie dies zur Anpassung an das schnelle Fading erforderlich wäre.

Es wird daher intensiv nach Wegen gesucht, wie die für die Übertragung von Strahlformungs-Rückkopplungsinformation von der Teilnehmerstation zur Basisstation zur Verfügung stehende Bandbreite genutzt werden kann, um den von der Basisstation verwendeten Gewichtungsvektor durch die Teilnehmerstation einerseits möglich genau zu steuern und andererseits möglichst häufig aktualisieren zu können.

Ein diesbezüglicher Vorschlag wurde auf dem TSG-RAN-Workshop in Oulu, Finnland, 4.-7. Juli 2000 von Samsung und Seoul National University vorgetragen (TSGR1#14(00)-0882). Der Vorschlag sieht vor, dass ein Satz von Basisvektoren definiert wird, die der Teilnehmerstation und der Basisstation gleichzeitig bekannt sind, und dass, anstatt die Komponenten eines von der Basisstation für die Strahlformung zu verwendenden Gewichtungsvektors von der Teilnehmerstation an die Basisstation zu übertragen, die Teilnehmerstation lediglich eine Kombination von Basisvektoren auswählt, durch deren Linearkombination der Gewichtungsvektor an der Basisstation gebildet werden soll, und einen Bezeichner dieser Kombination sowie eine Angabe über die relative Phasenlage der in die Linearkombination eingehenden Basisvektoren an die Basisstation überträgt.

Es liegt auf der Hand, dass bei einem solchen Verfahren die Anzahl von Bits eines Bezeichners einer gegebenen Kombination von Basisvektoren sich verringert, wenn nicht alle Kombinationen der Basisvektoren als Gewichtungsvektor zugelassen werden. Je weniger Kombinationen zugelassen werden, um so kleiner ist aber notwendigerweise die Zahl der an der Basisstation darstellbaren Linearkombinationen, d.h. um so gröber ist die Steuerung des Gewichtungsvektors durch die Teilnehmerstation.

Ein weiteres Problem ist, dass die Empfindlichkeit der Übertragung der Rückkopplungsinformation von der Teilnehmerstation an die Basisstation gegen Übertragungsfehler um so größer wird, je stärker diese verdichtet ist. Wenn man annimmt, dass Rückkopplungsinformation in Form von Zahlenwerten der einzelnen Komponenten eines Gewichtungsvektors an die Basisstation übertragen wird, so führt ein Fehler bei der Übertragung eines einzelnen Bits lediglich dazu, dass eine der Komponenten des von der Basisstation verwendeten Gewichtungsvektors fehlerhaft ist. Wenn jedoch anstelle solcher Zahlenwerte lediglich Codewörter zur Bezeichnung bestimmter Auswahlen von Basisvektoren an die Basisstation übertragen werden, so kann ein einzelner Bitfehler bei der Übertragung dazu führen, dass der ursprünglich von der Teilnehmerstation ausgewählte Gewichtungsvektor mit dem letztlich von der Basisstation verwendeten keinerlei Ähnlichkeit mehr hat.

Aufgabe der Erfindung ist, ein Verfahren zur Übertragung von Rückkopplungsinformationen für die Strahlformung anzugeben, bei dem Rückkopplungsinformation mit einer hohen Dichte, d.h. einem hohen Informationsgehalt, und dementsprechend geringem Bandbreitenbedarf übertragen wird, bei dem aber die Auswirkungen einer fehlerhaften Übertragung eines Bits möglichst gering gehalten sind.

Diese Aufgabe wird gelöst durch ein Verfahren mit den Merkmalen des Anspruchs 1. Das Verfahren basiert auf dem Gedanken, dass die Codewörter, die zum Spezifizieren einer bestimmten Linearkombination der Basisvektoren von der Teilnehmerstation an die Basisstation übertragen werden, diesen Kombinationen im Prinzip willkürlich zugeordnet werden können. Es ist daher für eine Vielzahl von Formaten solcher Codewörter möglich, die Zuordnung so zu treffen, dass zwei Codewörter, die sich in nicht mehr als einem Bit unterscheiden, zwei Auswahlen codieren, die sich in nicht mehr als einem ausgewählten Basisvektor unterscheiden. Bei einem solchen Verfahren führt ein fehlerhaft übertragenes Bit lediglich dazu, dass unter den Basisvektoren, die von der Basisstation zur Erzeugung des Gewichtungsvektors linear kombiniert werden, sich ein falscher befindet. Die anderen Basisvektoren hingegen sind tatsächlich die von der Teilnehmerstation ausgewählten.

Insbesondere in dem Falle, wo die Basisvektoren Eigenvektoren einer Kovarianzmatrix des von der Teilnehmerstation empfangenen Downlink-Signals sind, entspricht jeder dieser Basisvektoren einem Ausbreitungsweg des Downlink-Signals von der Basisstation zur Teilnehmerstation. D.h., in einer Situation, wo das Downlink-Signal auf mehreren Ausbreitungswegen zur Teilnehmerstation übertragen wird, führt ein isolierter Bitfehler lediglich zum Ausfall eines dieser Übertragungswege; auf den anderen hingegen wird das Signal korrekt übertragen und ist für die Teilnehmerstation weiterhin empfangbar. Auf diese Weise wird die Übertragungssicherheit deutlich verbessert.

Im allgemeinen umfasst der Satz der von der Teilnehmerstation und der Basisstation verwendeten Basisvektoren eine Mehrzahl N von Basisvektoren, wobei $N \geq 3$ ist, und die Codewörter sind jeweils für eine Auswahl von maximal n Basisvektoren definiert, wobei $n < N$ ist. Die Tatsache, dass somit nicht alle möglichen Kombinationen der Basisvektoren darstellbar sind, erlaubt es - unabhängig von der konkret getroffenen Zuordnung der einzelnen Vektorkombinationen zu den verfügbaren Codewörtern - die Zahl der für die Codewörter erforderlichen Bits gering zu halten. Die Zahl der benötigten Codewörter, d.h. die Anzahl der Möglichkeiten, n Basisvektoren aus N de finierten Basisvektoren auszuwählen

ist $P = \binom{n}{N}$. Zum Beispiel gibt es $\binom{2}{4} = 6$ Möglichkeiten, n=2 aus N=4 auszuwählen. Die minimale Länge eines Codeworts errechnet sich somit also immer zu $\left(\log_2 \binom{n}{N}\right)$. Ist $P = \binom{n}{N}$ kleiner als die Anzahl der möglichen Codewörter, die durch eine vorgegebene Anzahl von b Bits darstellbar ist [d.h. wenn $P < 2^b$], stehen Bitkombinationen mit der vorgegebenen Länge b zur Verfügung, denen keine Kombination von n Basisvektoren zugeordnet ist, und die deshalb für andere Steuerungszwecke eingesetzt werden können.

Um eine destruktive Interferenz von auf verschiedenen Ausbreitungswegen übertragenen Komponenten des Downlink-Signals an der Teilnehmerstation zu verhindern, ist es wünschenswert, wenn jedes Codewort, das eine Auswahl von wenigstens zwei Basisvektoren codiert, ferner ein Phasenverhältnis zwischen den ausgewählten Basisvektoren codiert. Diese Eigenschaft ist auch bei solchen Übertragungsverfahren zweckmäßig, bei denen ein falsch übertragenes Bit zu mehr als einem von der Basisstation fälschlich verwendeten Vektor führt.

Wenn dieses Phasenverhältnis nur zwei oder vier äquidistante Werte, etwa 0 und $\pi$ bzw. 0, $\pi/2$, $\pi$, $3\pi/2$, annehmen kann, so kann es mit 1 bzw. 2 Bit Rückkopplungsinformation übertragen werden.

Einer ersten Ausgestaltung des erfindungsgemäßen Verfahrens zufolge umfasst der Satz von Basisvektoren N=3 Vektoren, von denen jeweils bis zu n=2 ausgewählt werden. Hier genügen zur Übertragung einer Auswahl und einer Phaseninformation Codewörter von 4 Bit Länge, um einerseits die isolierte Auswahl eines einzelnen Basisvektors als auch die eines Paars von Basisvektoren und, im Falle der Auswahl eines Paars, vier mögliche Phasenverhältnisse zwischen den zwei ausgewählten Vektoren dieses Paars zu spezifizieren.

Einer zweiten Ausgestaltung zufolge ist jedes Codewort aus einem Auswahlabschnitt und einem Phasenabschnitt aufgebaut, wobei der Auswahlabschnitt die ausgewählten Vektoren und der Phasenabschnitt deren Phasenverhältnis codiert. Da die Codierung des Phasenabschnitts zweckmäßigerweise für jede ausgewählte Kombination von Basisvektoren die gleiche ist, läßt sich auf diese Weise die Umsetzung eines ermittelten Gewichtungsvektors in ein Codewort an der Teilnehmerstation sowie dessen Rückübersetzung an der Basisstation vereinfachen.

Wenn der Satz von Basisvektoren vier Basisvektoren umfasst, von denen jeweils bis zu n=2 ausgewählt werden, genügen Auswahlabschnitte von 3 Bit Länge, um jeweils alle möglichen Auswahlen von 2 Vektoren zu codieren. Dabei bleiben zwei 3-Bit-Werte, vorzugsweise "000" und "111", übrig, die keiner Kombination von zwei Basisvektoren zugeordnet werden.

Einer dieser Werte kann anstelle eines Codeworts an die Basisstation übertragen werden, um dieser zu signalisieren, dass lediglich ein einzelner Basisvektor ausgewählt worden ist, wobei eine Angabe darüber, um welchen es sich handelt, in dem Phasenabschnitt des betreffenden Codeworts übertragen werden kann.

Von den nicht einer Kombination von zwei Basisvektoren zugeordneten Werten können aber auch einer oder beide verwendet werden, um der Basisstation zu signalisieren, dass eine bei einer früheren Übertragung von Rückkopplungsinformation ausgewählte Linearkombination erneut als Gewichtungsvektor verwendet werden soll oder, alternativ, dass ein einzelner Basisvektor aus einer solchen Linearkombination als Gewichtungsvektor verwendet werden soll.

Hier kann wiederum der Phasenabschnitt genutzt werden, um der Basisstation zu signalisieren, welche Linearkombination aus einer Mehrzahl von bei früheren Übertragungen ausgewählten Linearkombinationen erneut verwendet werden soll, bzw. welcher Basisvektor verwendet werden soll.

Einer bevorzugten Ausgestaltung zufolge umfasst der Phasenabschnitt 2 Bit (entsprechend der Übertragung von vier möglichen Phasenlagen), wobei - im,Falle der Wiederverwendung bereits zuvor ausgewählter Linearkombinationen bzw. von Basisvektoren einer solchen Linearkombination zur Strahlformung - mit jedem übertragenen Bit des Phasenabschnitts eine Auswahl zwischen zwei auswählbaren, bereits früher ausgewählten Linearkombinationen bzw. Basisvektoren an die Basisstation übermittelt wird. Dies erlaubt es, zwischen den zwei besagten früher übertragenen Linearkombinationen doppelt so häufig umzuschalten, wie dies zwischen jeweils neu mit einem vollständigen übertragenen Codewort ausgewählten Linearkombinationen möglich ist. Selbstverständlich könnte der Phasenabschnitt auch drei oder mehr Bits umfassen, in einem solchen Fall wäre im Laufe der Übertragung dreimal oder öfter die Umschaltung zwischen ausgewählten Linearkombinationen bzw. Basisvektoren möglich.

Dabei ist es besonders zweckmäßig, wenn die Bits des Phasenabschnitts mit den Bits des Auswahlabschnitts verschachtelt übertragen werden, so dass die Bits des Phasenabschnitts über mehrere Codewörter hinweg in möglichst gleichmäßigem Abstand übertragen werden und so bei Nutzung zum Auswählen bereits früher übertragener Linearkombinationen ein Umschalten zwischen diesen in möglichst gleichmäßigen Zeitabständen ermöglichen.

Einer weiteren Ausgestaltung des Verfahrens zufolge kann der Satz von Basisvektoren auch lediglich zwei Basisvektoren umfassen, und mit jedem übertragen Codewort werden beide Basisvektoren in einem durch das Codewort definierten Phasenverhältnis zueinander ausgewählt.

Insbesondere bei dieser Ausgestaltung, aber auch bei den vorhergehenden ist es vorteilhaft, wenn die Codewörter ferner einen Amplitudenabschnitt umfassen, der das Amplitudenverhältnis der ausgewählten Basisvektoren definiert. Dieser Amplitudenabschnitt kann für je zwei ausgewählte Vektoren je ein Bit umfassen, dessen Wert angibt, ob die Amplitude des ersten dieser zwei Vektoren das n-fache oder das 1/n-fache der Amplitude des zweiten ist. Dabei ist n vorzugsweise eine reelle Zahl zwischen 0,15 und 0,7.

Weitere Merkmale und Vorteile der Ausgestaltung ergeben sich aus der nachfolgenden Beschreibung von Ausführungsbeispielen mit Bezug auf die Figuren sowie den Ansprüchen. Es zeigen:

Fig. 1 ein Blockschaltbild eines Mobilfunknetzes;

Fig. 2 ein Blockschaltbild einer Basisstation des Mobilfunknetzes aus Fig. 1;

Fig. 3 ein Blockschaltbild einer Teilnehmerstation dieses Mobilfunknetzes;

Fig. 4 ein erstes Format für die Übertragung von vier Bit langen Codewörtern in einem UMTS-Mobilfunksystem;

Fig. 5 ein zweites Format für die Übertragung von vier Bit langen Codewörtern;

Fig. 6 ein Format für die Übertragung von fünf Bit langen Codewörtern in einem UMTS-Mobilfunksystem;

Fig. 7 eine Weiterentwicklung des Formats aus Fig. 6; und

Fig. 8 ein Format mit drei Bit langen Codewörtern.

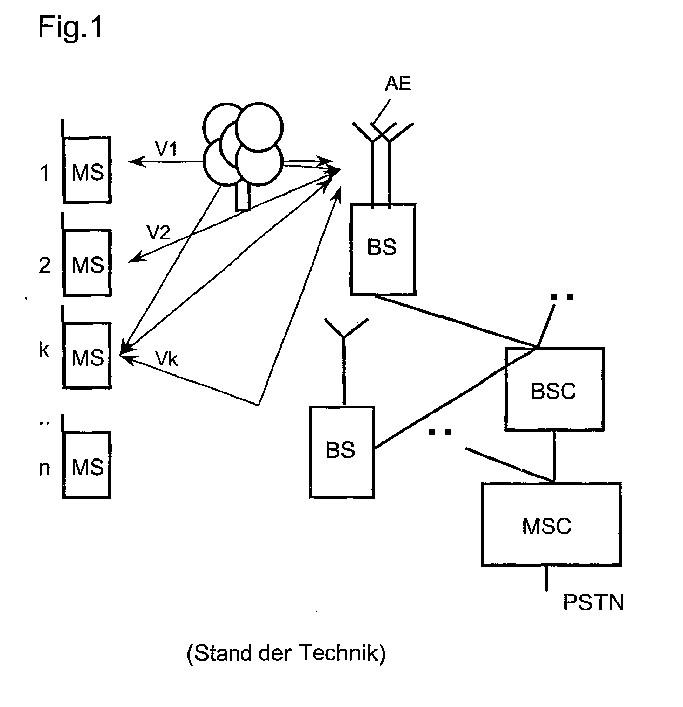

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente ($A_1$ - $A_M$) aufweisen.

In Fig. 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt.

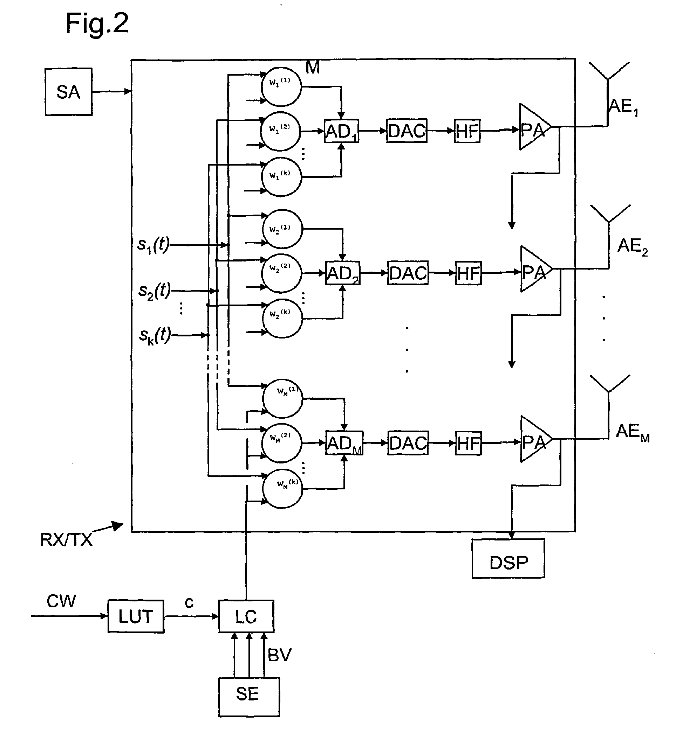

Fig. 2 zeigt schematisch den Aufbau einer Basisstation BS. Eine Signalerzeugungseinrichtung SA stellt das für die Teilnehmerstation MSk bestimmte Sendesignal in Funkblöcken zusammen und ordnet es einem Frequenzkanal TCH zu. Eine Sende/Empfangseinrichtung TX/RX erhält das Sendesignal $s_k(t)$ von der Signalerzeugungseinrichtung SA. Die Sende/Empfangseinrichtung TX/RX umfaßt ein Strahlformungsnetzwerk, in dem das Sendesignal $s_k(t)$ für die Teilnehmerstation MSk mit Sendesignalen $s_1(t)$, $s_2(t)$, ... verknüpft wird, die für andere Teilnehmerstationen bestimmt sind, denen die gleiche Sendefrequenz zugeordnet ist. Das Strahlformungsnetzwerk umfaßt für jedes Sendesignal und jedes Antennenelement einen Multiplizierer M, der das Sendesignal $s_k(t)$ mit einer Komponente $w_i^{(k)}$ eines Gewichtungsvektors $w^{(k)}$ multipliziert, der der empfangenden Teilnehmerstation MSk zugeordnet ist. Die Ausgangssignale der jeweils einem der Antennenelemente $AE_1$, $AE_2$,..., $AE_M$ zugeordneten Multiplizierer M werden von einem Addierer $AD_1$, $AD_2$,..., $AD_M$ addiert, von einem Digitalanalogwandler DAC analogisiert, auf die Sendefrequenz umgesetzt (HF) und in einem Leistungsverstärker PA verstärkt, bevor sie das Antennenelement $AE_1$, ..., $AE_M$ erreichen. Eine zu dem beschriebenen Strahlformungsnetz analoge Struktur, die in der Figur nicht eigens dargestellt ist, ist zwischen den Antennenelementen $AE_1$, $AE_2$, ..., $AE_M$ und einem digitalen Signalprozessor DSP angeordnet, um das empfangene Gemisch von Uplink-Signalen in die Beiträge der einzelnen Teilnehmerstationen zu zerlegen und diese getrennt dem DSP zuzuführen.

Eine Speichereinrichtung SE enthält eine Mehrzahl von Basisvektoren B, aus denen die jeweils von den Multiplizierern M verwendeten Gewichtungsvektoren durch Linearkombination in einem Linearkombinierer LC gesteuert durch ein Koeffizientensignal c erzeugt werden. Das Koeffizientensignal c besteht aus einer Folge komplexwertiger Koeffizienten, die für jeden der Basisvektoren B das Gewicht bestimmen, mit dem er in den verwendeten Gewichtungsvektor eingeht. Das Koeffizientensignal c wird durch Auslesen einer Nachschlagetabelle LUT erzeugt, die mit einem Codewort CW adressiert wird, das von einer Teilnehmerstation an die Basisstation BS übertragen worden ist.

Der Satz der Basisvektoren B kann für alle mit der Basisstation BS kommunizierenden Teilnehmerstationen MS einheitlich vorgegeben sein. So kann z.B. ein Satz von Basisvektoren fest vordefiniert sein, die jeweils unterschiedlichen Abstrahlungsrichtungen der Antenneneinrichtung AE der Basisstation BS entsprechen. Alternativ ist es möglich, in der Speichereinrichtung SE für jede einzelne Teilnehmerstation MS1 ... MSn einen individuell festgelegten Satz von Basisvektoren BS zu speichern, die nur für die Erzeugung der Gewichtungsvektoren der jeweils zugeordneten Teilnehmerstation herangezogen werden. Bei diesen Basisvektoren handelt es sich vorzugsweise um Eigenvektoren einer zeitlich gemittelten Kovarianzmatrix des von der betreffenden Teilnehmerstation empfangenen Downlink-Signals oder des von dieser Teilnehmerstation kommend von der Basisstation empfangenen Uplink-Signals.

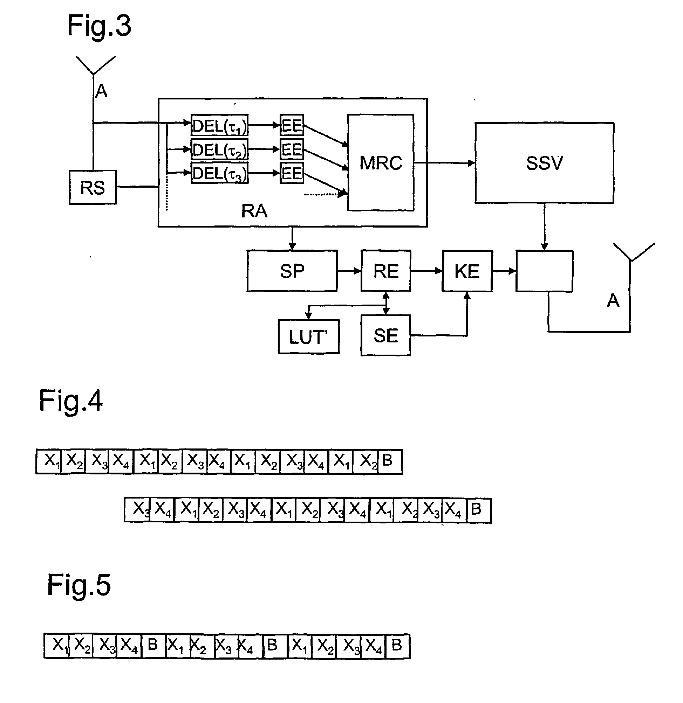

Figur 3 zeigt in einem Beispiel für einen Rake-Empfänger und CDMA-Technologie schematisch den Aufbau einer Teilnehmerstation MSk zur Durchführung einer ersten Ausgestaltung des erfindungsgemäßen Verfahrens. Das Verfahren lässt sich auch auf anderweitig aufgebaute Teilnehmerstation anwenden. Die Teilnehmerstation MSk umfaßt eine einzige Antenne A, die das von der Basisstation BS ausgestrahlte Downlink-Signal empfängt. Das ins Basisband umgesetzte Empfangssignal von der Antenne A wird einem sogenannten Rake Searcher RS zugeführt, der dazu dient, Laufzeitunterschiede von Beiträgen des Downlink-Signals zu messen, die die Antenne A auf unterschiedlichen Ausbreitungswegen erreicht haben. Das Empfangssignal liegt ferner an einem Rake-Verstärker RA an, der eine Mehrzahl von Rake-Fingern umfaßt, von denen drei in der Figur dargestellt sind, und die jeweils ein Verzögerungsglied DEL und einen Entspreizer-Entscrambler EE aufweisen. Die Verzögerungsglieder DEL verzögern das Empfangssignal jeweils um einen vom Rake-Searcher RS gelieferten Verzögerungswert $\tau_1$, $\tau_2$, $\tau_3$, .... Die Entspreizer-Entscrambler EE liefern an ihren Ausgängen jeweils eine Folge von abgeschätzten Symbolen, wobei die Ergebnisse der Abschätzung für die einzelnen Entscrambler aufgrund unterschiedlicher Phasenlagen des Downlink-Signals zu Entscrambling- und Spreizcode in den einzelnen Fingern des Rake-Verstärkers unterschiedlich sein können.

In den von den Entspreizern-Entscramblern EE gelieferten Symbolfolgen sind auch die Ergebnisse der Abschätzung von Trainingssequenzen enthalten, die von der Basisstation BS ausgestrahlt werden, und die für jedes Antennenelement der Basisstation quasi-orthogonal und charakteristisch sind. Ein Signalprozessor SP dient zum Vergleich der Ergebnisse der Abschätzung dieser Trainingssequenzen mit den der Teilnehmerstation bekannten, tatsächlich in den Trainingssequenzen enthaltenen Symbole. Anhand dieses Vergleichs kann die Impulsantwort des Übertragungskanals zwischen Basisstation BS und Teilnehmerstation MSk für jeden einzelnen Finger oder Tap ermittelt werden. An die Ausgänge der Entspreizer-Entscrambler EE ist auch ein Maximum Ratio Combiner MRC angeschlossen, der die einzelnen abgeschätzten Symbolfolgen zu einer kombinierten Symbolfolge mit bestmöglichen Signalrauschverhältnis zusammenfügt und diese an eine Sprachsignalverarbeitungseinheit SSV liefert. Die Arbeitsweise dieser Einheit SSV, die die empfangene Symbolfolge in ein für einen Benutzer hörbares Signal umwandelt bzw. empfangene Töne in eine Sendesymbolfolge umsetzt, ist hinlänglich bekannt und braucht hier nicht beschrieben zu werden.

Der Signalprozessor SP ermittelt die Impulsantworten eines jeden Antennenelements $AE_1$, ..., $AE_M$. Die Auswertung der kurzfristigen Impulsantwort ermöglicht der Teilnehmerstation MSk die Abschätzung eines "optimalen Gewichtungsvektors", dessen Verwendung zur Strahlformung durch die Basisstation BS zum aktuellen Zeitpunkt eine optimale Übertragungsqualität ermöglichen würde. In einer Recheneinheit RE wird der optimale Gewichtsvektor anhand der in der Speichereinheit SE vorliegenden Basisvektoren und der Impulsantwort berechnet. Anschließend wird der Gewichtsvektor in einer Kodiereinheit KE mit einem Bezeichner kodiert.

Eine zweckmäßige Möglichkeit für die Teilnehmerstation MSk, die Basisvektoren festzulegen, ist, in der aus der zitierten DE 198 03 188 bekannten Weise eine räumliche Kovarianzmatrix $R_{xx}$ zu bestimmen, diese zeitlich zu mitteln und ihre Eigenvektoren zu ermitteln. Diese werden anschließend an die Basisstation BS übertragen und von beiden Stationen BS, MSk, als Basisvektoren eingesetzt.

Die Recheneinheit RE wählt aus einer Mehrzahl von Linearkombinationen der Basisvektoren B, für die jeweils Codewörter in einer zur Tabelle LUT der Basisstation analogen nachschlagetabelle LUT' gespeichert sind, diejenige aus, die dem ermittelten optimalen Vektor am ähnlichsten ist, d.h. die die geringste Richtungsabweichung vom optimalen Vektor besitzt, bzw. denjenigen Vektor, der die bestmöglichen Übertragungseigenschaften zur Folge hat, wenn er in der Basisstation angewendet wird.

Dasjenige Codewort der Nachschlagetabelle LUT', das der dem optimalen Gewichtungsvektor ähnlichsten Linearkombination entspricht, wird an die Basisstation übertragen.

Die nachfolgende Tabelle 1 zeigt ein erstes Beispiel für einen Satz solcher Codewörter und die Bedeutung der einzelnen Codewörter.

Tabelle 1

| Codewort (Bits) $X_1 X_2 X_3 X_4$ | selektierter Basisvektor $B_x$ | selektierter Basisvektor $B_y$ | Phase $\varphi$ |
|---|---|---|---|
| 0 0 0 0 | | | |
| 0 0 1 0 | B1 | keine | keine |
| 0 1 0 0 | B2 | keine | keine |
| 1 0 0 0 | B3 | keine | keine |
| 1 1 0 0 | B2 | B3 | 0 |

(fortgesetzt)

| Codewort (Bits) $X_1 X_2 X_3 X_4$ | selektierter Basisvektor $B_x$ | selektierter Basisvektor $B_y$ | Phase $\varphi$ |
|---|---|---|---|
| 1 1 0 1 | B2 | B3 | $\pi/2°$ |
| 1 1 1 1 | B2 | B3 | $\pi$ |
| 1 1 1 0 | B2 | B3 | $-\pi/2$ |
| 1 0 0 1 | B1 | B3 | 0 |
| 1 0 1 1 | B1 | B3 | $\pi/2$ |
| 1 0 1 0 | B1 | B3 | $\pi$ |
| 0 0 1 1 | B1 | B3 | $-\pi/2$ |
| 0 1 0 1 | B1 | B2 | 0 |
| 0 1 1 1 | B1 | B2 | $\pi/2$ |
| 0 1 1 0 | B1 | B2 | $\pi$ |
| 0 0 0 1 | B1 | B2 | $-\pi/2$ |

Jedes Codewort umfasst 4 Bits, die mit $X_1$, $X_2$, $X_3$, $X_4$ bezeichnet werden. Der Bit-Kombination "0000" ist keine Funktion zugeordnet. Die Bit-Kombinationen "0010", "0100", "1000", codieren jeweils die Auswahl eines einzelnen Basisvektors B1, B2, B3 aus dem diese drei Vektoren umfassenden Satz von Basisvektoren B. Bit-Kombinationen, die zwei oder drei Einsen enthalten, sind Codewörter für die Auswahl von jeweils zwei Basisvektoren, wobei gleichzeitig die relative Phasenlage dieser zwei Vektoren mit einer Auflösung von 90° festgelegt wird. So steht z. B das Codewort "1101" für einen Gewichtungsvektor w der Form

$$w = B2 + B3 \, e^{-i(\pi/2)} \; .$$

Bei jedem Codewort der Tabelle bewirkt die Vertauschung eines Bits allenfalls den Austausch eines Basisvektors in der durch das Codewort dargestellten Auswahl. Falls eines der vier Codewörter, die lediglich ein Bit mit Wert 1 aufweisen, fehlerhaft als "0000" übertragen wird, so kann dies an der Basisstation BS festgestellt werden, da dieser Wert nicht verwendet wird. In einem solchen Fall kann die Basisstation BS den durch das zuvor übertragene Codewort spezifizierten Gewichtungsvektor erneut für die Strahlformung verwenden.

Es liegt auf der Hand, dass die Zuordnung der Phasenwerte $\varphi$ zu den Codewörtern auch in anderer Weise als der hier dargestellten erfolgen könnte, insbesondere könnten die in der Tabelle angegebenen Phasenwerte $\varphi$ jeweils um ein für alle Codewörter gleiches Offset $\psi$ erhöht oder verringert sein.

Ferner können die vier Bits $X_1$, $X_2$, $X_3$, $X_4$ der Codewörter in einer beliebigen, festgelegten Reihenfolge übertragen werden, ohne dass dies einen Einfluss auf die Wirksamkeit des Verfahrens hat.

Ein zweiter Satz von Codewörtern ist in Tabelle 2 dargestellt. Diese Codewörter bestehen jeweils aus einem 3 Bit langen Auswahlabschnitt $X_1$, $X_2$, $X_3$ und einem 2 Bit langen Phasenabschnitt $X_4$, $X_5$, dessen Wert jeweils die relative Phasenlage von im Auswahlabschnitt codierten Paaren von ausgewählten Basisvektoren angibt. Dieser Satz von Codewörtern wird eingesetzt zum Selektieren von bis zu zwei Basisvektoren $B_x(m)$, $B_y(m)$ aus einem Satz von vier möglichen Basisvektoren {B1, B2, B3, B4}. Da insgesamt sechs verschiedene Möglichkeiten existieren, zwei Elemente aus einer vierelementigen Menge auszuwählen, genügen sechs verschiedene Werte des Auswahlabschnitts, um die möglichen Auswahlen von zwei Basisvektoren zu codieren. Zwei Werte des Auswahlabschnitts, die Werte "000" und "111", stehen zu anderen Steuerungszwecken zur Verfügung.

Tabelle 2

| Codewort $X_1 X_2 X_3 X_4 X_5$ | selektierter Basisvektor $B_x(m)$ | selektierter Basisvektor $B_y(m)$ | $B_{z1}$ | $B_{z2}$ | Phase $\varphi$ |
|---|---|---|---|---|---|
| 0 0 1 a b | B1 | B2 | - | - | $\varphi(a,b)$ |
| 0 1 0 a b | B1 | B3 | - | - | $\varphi(a,b)$ |
| 0 1 1 a b | B1 | B4 | - | - | $\varphi(a,b)$ |

(fortgesetzt)

| Codewort $X_1 X_2 X_3 X_4 X_5$ | selektierter Basisvektor $B_x(m)$ | selektierter Basisvektor $B_y(m)$ | $B_{z1}$ | $B_{z2}$ | Phase $\varphi$ |
|---|---|---|---|---|---|
| 1 0 0 a b | B2 | B3 | - | - | $\varphi(a,b)$ |
| 1 0 1 a b | B2 | B4 | - | - | $\varphi(a,b)$ |
| 1 1 0 a b | B3 | B4 | - | - | $\varphi(a,b)$ |
| 1 1 1 0 0 | - | - | Bx(m-1) | Bx(m-1) | - |
| 1 1 1 0 1 | - | - | Bx(m-1) | By(m-1) | - |
| 1 1 1 1 0 | - | - | By(m-1) | Bx(m-1) | - |
| 1 1 1 1 1 | - | - | By(m-1) | By(m-1) | - |
| 0 0 0 0 0 | - | - | Bx(m-2) | Bx(m-2) | - |
| 0 0 0 0 1 | - | - | Bx(m-2) | By(m-2) | - |
| 0 0 0 1 0 | - | - | By(m-2) | Bx(m-2) | - |
| 0 0 0 1 1 | - | - | By(m-2) | By(m-2) | - |

Bei dem in Tabelle 2 gezeigten Codewörtersatz dienen diese beiden Werte dazu, der Basisstation BS zu signalisieren, dass ein bereits früher ausgewählter Basisvektor $B_X(m-1)$, $B_y(m-1)$, $B_X(m-2)$ oder $B_X(m-2)$ erneut verwendet werden soll. Um diesen Satz von Codewörtern nutzen zu können, verfügen Teilnehmerstation und Basisstation zweckmäßigerweise über ein Register mit zwei Speicherplätzen für je zwei Basisvektoren $B_x(m-1)$, $By(m-1)$ bzw. $B_x(m-2)$, $B_x(m-2)$, und jedesmal, wenn die Teilnehmerstation eine neue als Gewichtungsvektor zu verwendende Kombination $B_x(m)$, $B_x(m)$ von Basisvektoren ermittelt hat, fragt sie dieses Register ab, ob die entsprechenden Basisvektoren darin enthalten sind. Wenn nein, so wird der jeweils älteste Eintrag $B_x(m-2)$, $B_x(m-2)$ im Register der Teilnehmerstation wie auch der Basisstation mit der neu ausgewählten Kombination $B_X(m)$, $B_x(m)$ überschrieben; andernfalls überträgt die Teilnehmerstation an die Basisstation einen Auswahlabschnitt "000" oder "111", gefolgt von zwei Bits eines Phasenabschnitts, die die im Register ausgewählten Basisvektoren spezifizieren.

So bedeutet z.B. die Übertragung eines Auswahlabschnitts "111" und eines Phasenabschnitts "00", dass von den zwei Basisvektoren $B_x(m-1)$, $B_y(m-1)$ des jüngeren Eintrags des Registers nur der erste verwendet wird. Auf diese Weise ist es möglich, die Verwendung eines einzelnen Basisvektors anstelle einer Kombination von zweien zu spezifizieren. Analog bedeutet die Übertragung des Phasenabschnitts mit dem Wert "11" die Verwendung des zweiten Vektors $B_y(m-1)$ aus der Kombination des jüngeren Eintrags. Durch Verwendung der Phasenabschnittswerte "01" bzw. "10" ist es darüber hinaus möglich, der Basisstation zu signalisieren, dass die zwei genannten Basisvektoren $B_x(m-1)$, $B_y(m-1)$ zeitlich nacheinander verwendet werden sollen. Genauer gesagt verwendet die Basisstation, sobald sie den entsprechenden Auswahlabschnitt und das erste Bit $X_4$ des Phasenabschnitts empfangen hat, als Gewichtungsvektor den durch dieses Bit spezifizierten Basisvektor; sobald sie das Bit $X_5$ empfangen hat, verwendet sie den durch dieses Bit spezifizierten Vektor.

Die auf diese Weise erreichbare Steuerung des Gewichtungsvektors ist zwar grober, als wenn jeweils ein Paar von Vektoren linear kombiniert werden kann, andererseits kann innerhalb der Zeitspanne, die zum Übertragen eines 5-Bit-Codeworts benötigt wird, der von der Basisstation angewendete Gewichtungsvektor zweimal aktualisiert werden. Ein solches Verfahren ist daher besonders geeignet für die Strahlformung im Falle einer schnell bewegten Teilnehmerstation.

Oben wurde nur der Fall des Auswahlabschnitts mit Wert "111" betrachtet; bei Übertragung des Auswahlabschnitts mit Wert "000" wird jeweils der zeitlich ältere der zwei Einträge des Registers für die Strahlformung herangezogen, wobei die Auswahl zwischen erstem und zweitem Basisvektor $B_x(m-2)$, $B_y(m-2)$ dieses Eintrags in gleicher Weise wie oben angegeben durch den Phasenabschnitt $X_4$, $X_5$ steuerbar ist.

Ein drittes Beispiel für einen Satz von Codewörtern ist in der nachfolgenden Tabelle 3 dargestellt. Die Zuordnung von Werten des Auswahlabschnitts $X_1$, $X_2$, $X_3$, zu Kombinationen von Basisvektoren und die Verwendung des Werts "111" des Auswahlabschnitts ist die gleiche wie im Fall der Tabelle 2; abweichend von dieser wird hier der Wert "000" des Auswahlabschnitts benutzt, um der Basisstation zu signalisieren, dass ein einzelner Basisvektor als Gewichtungsvektor selektiert wird, wobei eine Angabe darüber, welches der selektierte Basisvektor unter den vier vorhandenen Basisvektoren ist, im Phasenabschnitt $X_4$, $X_5$, codiert ist.

Tabelle 3

| Codewort $X_1 X_2 X_3 X_4 X_5$ | selektierter Basisvektor $B_x(m)$ | selektierter Basisvektor $B_y(m)$ | $B_{z1}$ | $B_{z2}$ | Phase $\varphi$ |
|---|---|---|---|---|---|
| 0 0 1 a b | B1 | B2 | - | - | $\varphi(a,b)$ |
| 0 1 0 a b | B1 | B3 | - | - | $\varphi(a,b)$ |
| 0 1 1 a b | B1 | B4 | - | - | $\varphi(a,b)$ |
| 1 0 0 a b | B2 | B3 | - | - | $\varphi(a,b)$ |
| 1 0 1 a b | B2 | B4 | - | - | $\varphi(a,b)$ |
| 1 1 0 a b | B3 | B4 | - | - | $\varphi(a,b)$ |
| 1 1 1 0 0 | - | - | Bx(m-1) | Bx(m-1) | - |
| 1 1 1 0 1 | - | - | Bx(m-1) | By(m-1) | - |
| 1 1 1 1 0 | - | - | By(m-1) | Bx(m-1) | - |
| 1 1 1 1 1 | - | - | By(m-1) | By(m-1) | - |
| 0 0 0 0 0 | B1 | - | - | - | - |
| 0 0 0 0 1 | B2 | - | - | - | - |
| 0 0 0 1 0 | B3 | - | - | - | - |
| 0 0 0 1 1 | B4 | - | - | - | - |

Der Codewortsatz der nachfolgenden Tabelle 4 unterscheidet sich von denen der Tabellen 2 und 3 im wesentlichen dadurch, dass bei Verwendung des Auswahlabschnittwerts "111" nicht ein einzelner Basisvektor aus einer zuvor übertragenen Linearkombination selektiert wird, sondern die gesamte Linearkombination, d.h., dass der früher ausgewählte Gewichtungsvektor von der Basisstation BS erneut für die Strahlformung verwendet wird.

Auch hier besteht die Möglichkeit, bei Wiederverwendung von bereits früher ausgewählten Gewichtungsvektoren die Strahlformung durch die Basisstation im Laufe der Übertragung eines Codeworts zweimal zu aktualisieren. Auch hier wird wie im Falle des Codewortsatzes der Tabelle 2 an Teilnehmerstation und Basisstation ein Register für früher ausgewählte Linearkombinationen benötigt, das genauso wie mit Bezug auf Tabelle 2 beschrieben aktualisiert wird.

Wenn bei dem Codewortsatz der Tabelle 4 im Anschluss an den Auswahlabschnitt "111" der Phasenabschnitt "00" übertragen wird, verwendet die Basisstation bis zur Übertragung des nächsten Codeworts den jeweils jüngeren Eintrag w(m-1) des Registers als Gewichtungsvektor; wird der Phasenabschnitt "01" übertragen, so verwendet sie nacheinander den älteren Eintrag w(m-2), dann den jüngeren Eintrag w(m-1), usw..

Tabelle 4

| Codewort $X_1 X_2 X_3 X_4 X_5$ | selektierter Basisvektor $B_x(m)$ | selektierter Basisvektor $B_y$ (m) | $w_{s1}$ | $w_{s2}$ | Phase $\varphi$ |
|---|---|---|---|---|---|
| 0 0 1 a b | B1 | B2 | - | - | $\varphi(a,b)$ |
| 0 1 0 a b | B1 | B3 | - | - | $\varphi(a,b)$ |
| 0 1 1 a b | B1 | B4 | - | - | $\varphi(a,b)$ |
| 1 0 0 a b | B2 | B3 | - | - | $\varphi(a,b)$ |
| 1 0 1 a b | B2 | B4 | - | - | $\varphi(a,b)$ |
| 1 1 0 a b | B3 | B4 | - | - | $\varphi(a,b)$ |
| 1 1 1 0 0 | - | - | w(m-1) | w(m-1) | - |
| 1 1 1 0 1 | - | - | w(m-1) | w(m-2) | - |
| 1 1 1 1 0 | - | - | w(m-2) | w(m-1) | - |
| 1 1 1 1 1 | - | - | w(m-2) | w(m-2) | - |
| 0 0 0 0 0 | B1 | - | - | - | - |

(fortgesetzt)

| Codewort $X_1 X_2 X_3 X_4 X_5$ | selektierter Basisvektor $B_x(m)$ | selektierter Basisvektor $B_y$ (m) | $w_{s1}$ | $w_{s2}$ | Phase $\varphi$ |
|---|---|---|---|---|---|
| 0 0 0 0 1 | B2 | - | - | - | - |
| 0 0 0 1 0 | B3 | - | - | - | - |
| 0 0 0 1 1 | B4 | - | - | - | - |

Der Auswahlabschnitt "000" kann, wie in Tabelle 4 dargestellt, benutzt werden, um jeweils einen einzelnen Basisvektor B1, B2, B3 oder B4 als Gewichtungsvektor für die Basisstation zu selektieren, genauso wie oben in Bezug auf Tabelle 3 beschrieben. Alternativ kann aber auch vorgesehen werden, dass die Register nicht zwei, sondern drei Einträge für zuvor verwendete Gewichtungsvektoren w(m-1), w(m-2), w(m-3) enthalten können, so dass mit Hilfe des Auswahlabschnitts "000" die aufeinanderfolgende Verwendung von insgesamt drei verschiedenen früheren Kombinationen bzw. Gewichtungsvektoren spezifizierbar ist, wie in nachfolgender Tabelle 5 gezeigt.

Tabelle 5

| Codewort $X_1 X_2 X_3 X_4 X_5$ | selektierter Basisvektor $B_x(m)$ | selektierter Basisvektor $B_y$ (m) | $w_{s1}$ | $W_{s2}$ | Phase $\varphi$ |
|---|---|---|---|---|---|
|  | - | - | - | - | - |
| 0 0 0 0 0 | - | - | - | - | - |
| 0 0 0 0 1 | - | - | w(m-3) | w(m-3) | - |
| 0 0 0 1 0 | - | - | w(m-3) | w(m-1) | - |
| 0 0 0 1 1 | - | - | w(m-3) | w(m-2) | - |

Beim UMTS-System können, wenn in jedem Zeitschlitz einer Teilnehmerstation ein Bit zu übertragender Rückkopplungsinformation zur Verfügung steht, insgesamt 15 Bit innerhalb eines Rahmens übertragen werden.

Figuren 4 und 5 zeigen mögliche Formate für die Übertragung der Codewörter der Tabelle 1 innerhalb eines UMTS-Rahmens. Beim Beispiel der Fig. 4 enthält jeder Rahmen drei vollständige Codewörter, und ein Codewort wird zwei Rahmen übergreifend übertragen. Das letzte Bit (oder ein beliebiges anderes Bit) jedes Rahmens ist von einer Aktualisierungsinformation belegt, die verwendet wird, um Änderungen der Komponenter der Basisvektoren B1, B2, ... , die von der Teilnehmerstation MSk fortlaufend gemessen werden, an die Basisstation BS zu übermitteln.

Beim Beispiel der Fig. 5 werden in jedem Rahmen drei Codewörter und in Verbindung mit jedem Codewort ein Bit Aktualisierungsinformation übertragen, so dass hier keine Aufteilung eines Codeworts auf zwei Rahmen erforderlich ist.

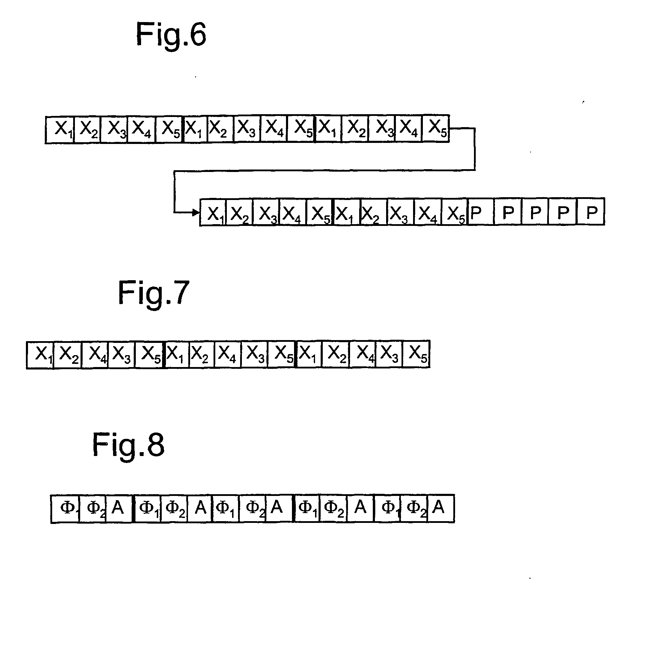

Fig. 6 zeigt ein Beispiel eines Formats, das für die Übertragung von 5-Bit-Codewörtern geeignet ist. Hier werden im Wechsel zwei verschiedene Rahmenformate eingesetzt, ein erstes, das drei vollständige Codewörter enthält und ein zweites, das zwei vollständige Codewörter und 5 Bit Aktualisierungsinformation enthält. Die zwei Formate folgen in einer vorgegebenen Reihenfolge aufeinander, z.B. können jeweils zwei erste Formate und ein nachfolgendes zweites Format übertragen werden.

Fig. 7 zeigt eine Weiterentwicklung des Formats aus Fig. 6. Wie bereits erwähnt, ist die Reihenfolge in der die Bits eines Codeworts übertragen werden, innerhalb des Codeworts im Prinzip beliebig. Bei dem Format der Fig. 7 ist gegenüber dem der Fig. 6 die Reihenfolge der Bits $X_3$, $X_4$, vertauscht. D.h., die zwei Bits $X_4$, $X_5$ des Phasenabschnitts sind durch ein Bit $X_3$ des Auswahlabschnitts voneinander getrennt. Die in einem einzelnen Codewort an die Basisstation übertragene Information ist die gleiche wie beim Format der Fig. 6. Das Format ermöglicht jedoch eine andere, vorteilhafte Art der Verarbeitung an der Basisstation.

Als Beispiel wird angenommen, dass das Format von Fig. 7 angewendet wird, um Codewörter aus dem Satz von Tabelle 2 zu übertragen. Wenn die Basisstation als Auswahlbits $X_1$, $X_2$ entweder "00" oder "11" empfangen hat, so besteht die Möglichkeit, dass ein früher verwendeter Basisvektor erneut verwendet werden soll. Gewissheit darüber hat die Basisstation erst nach Übertragung des Bits $X_3$. Wenn jedoch im unmittelbar zuvor übertragenen Codewort ebenfalls die Wiederverwendung früherer Basisvektoren ausgewählt worden ist, so ist die Vermutung gerechtfertigt, dass dies beim aktuellen Codewort ebenfalls der Fall sein wird. In diesem Fall verwendet die Basisstation, sobald sie $X_4$ empfangen hat, je nach dessen Wert entweder den ersten oder den zweiten Vektor Bx(m-1) oder By(m-1) des jüngeren Eintrags in dem Register als Gewichtungsvektor.

Falls das anschließend übertragene Bit $X_3$ den Wert 0 hat, so bedeutet dies, dass die Wiederverwendung bereits übertragener Basisvektoren von der Teilnehmerstation nicht gewünscht war, und die Basisstation verwendet als Gewichtungsvektor die in dem Codewort spezifizierte Kombination von Basisvektoren, sobald das Codewort vollständig übertragen ist.

Wird aber $X_3=1$ übertragen, so war die Annahme der Basisstation richtig, dass früher übertragene Basisvektoren erneut verwendet werden sollen. In diesem Fall wählt sie, sobald sie das Bit $X_5$ empfangen hat, den durch dieses Bit spezifizierten Vektor des jüngeren Eintrags des Registers als Gewichtungsvektor aus, wie in Tabelle 2 angegeben.

In analoger Weise wird mit den Basisvektoren des älteren Eintrages vorgegangen, wenn die Auswahlbits $X_1$, $X_2$="00" übertragen werden.

Selbstverständlich ist das Format der Fig. 7 in analoger Wiese auch auf die Codewörter der Tabellen 3 bis 5 anwendbar, wobei im Falle der Tabellen 4 bzw. 5 lediglich nach Übertragung der entsprechenden Auswahlbits $X_1$, $X_2$ anstelle eines einzelnen Basisvektors ein vollständiger, bereits früher verwendeter und im Register aufgezeichneter Gewichtungsvektor erneut verwendet wird.

Fig. 8 zeigt ein weiteres Beispiel eines Formats für die Übertragung von Codewörtern. Bei diesem Format umfasst der Satz der Basisvektoren nur zwei Basisvektoren, die beide von der Basisstation ständig zu einem Gewichtungsvektor linear kombiniert werden, wobei ein Phasenabschnitt, bestehend aus Bits $\varphi_1$, $\varphi_2$, jedes Codeworts eine relative Phasenlage der zwei Basisvektoren mit einer Auflösung von $\pi/2$ spezifiziert, und ein Amplitudenabschnitt, hier bestehend aus einem einzigen Bit A, eine relative Amplitude der zwei Basisvektoren definiert. Genauer gesagt legt das Amplitudenbit A fest, ob von den zwei Basisvektoren des Satzes der erste die a-fache Amplitude des zweiten hat, oder umgekehrt, wobei a eine reelle Zahl zwischen 0,15 und 0,7, vorzugsweise im Bereich 0,4 bis 0,6, ist.

Es liegt auf der Hand, dass die hier beschriebenen Verfahren in vielfacher Hinsicht im Rahmen der vorliegenden Erfindung weiterentwickelt werden können. Z.B. kann ein Phasenabschnitt, der auch mehr als ein Bit umfassen kann, zu den Codewörtern der obigen Tabellen hinzugefügt werden, um so im Falle der Auswahl eines Paars von Basisvektoren deren relative Amplituden festzulegen. Denkbar ist auch, bei den 5-Bit-Codewörtern der Tabellen 2 bis 5 nur eines der Bits $X_4$, $X_5$, als Phasenabschnitt und das andere als Amplitudenabschnitt zu verwenden. Da im Falle der Übertragung der Werte "000" oder "001" als Auswahlabschnitt keine Amplitude spezifiziert werden muss, können diese zwei Bits auch weiterhin zum Spezifizieren von früher verwendeten Basisvektoren, Gewichtungsvektoren oder von einzelnen Basisvektoren verwendet werden.

Insbesondere wenn N größer als 4 ist, kann es zweckmäßig sein, Kodewörter bzw. Auswahlabschnitte nicht nur einem einzigen Wert von n zuzuordnen, sondern mehreren. So kann man z. B. im Fall N=8 Kodewörter zum Bezeichnen sowohl von n=2 als auch von n=3 oder mehr Basisvektoren zuordnen. Bei Annahme eines Phasenabschnitts von 2 Bit Länge werden dann zum Bezeichnen eines einzelnen Basisvektors zwei Werte des Auswahlabschnitts jeweils in Verbindung mit vier möglichen Werten des Phasenabschnitts benötigt.

**Patentansprüche**

1. Verfahren zur Übertragung von Rückkopplungsinformation für die Strahlformung in einem Funk-Kommunikationssystem mit Teilnehmerstationen (MSk, MS1, MS2,...) und einer Basisstation (BS), die eine Antenneneinrichtung (AE) mit mehreren Antennenelementen ($AE_1$ bis $AE_M$) aufweist, die ein Downlinksignal jeweils gewichtet mit Komponenten ($w_i$, i=1, ..., M) eines aktuellen Gewichtungsvektors $\mathbf{w} = (w_1\ w_2\ ...\ w_M)^T$ an eine Teilnehmerstation (MSk) abstrahlen, wobei die Teilnehmerstation (MSk) aus einem Satz von Basisvektoren eine Auswahl trifft, ein Kodewort mit einer vorgegebenen Zahl von Bits an die Basisstation überträgt, das die getroffene Auswahl definiert, und die Basisstation den aktuellen Gewichtungsvektor als Linearkombination der ausgewählten Basisvektoren erzeugt, **dadurch gekennzeichnet, dass** die Kodewörter den möglichen Auswahlen so zugeordnet werden, dass zwei Kodewörter, von denen zumindest eines eine Auswahl mit mindestens zwei Basisvektoren umfasst und die sich in nicht mehr als einem Bit unterscheiden, zwei Auswahlen kodieren, die sich in nicht mehr als einem ausgewählten Basisvektor unterscheiden.

2. Verfahren nach Anspruch 1, **dadurch gekennzeichnet, dass** der Satz von Basisvektoren N Basisvektoren umfasst, wobei N ≥ 3 ist, und dass die Kodewörter jeweils eine Auswahl von n Basisvektoren kodieren, wobei n < N ist.

3. Verfahren nach Anspruch 1 oder 2, **dadurch gekennzeichnet, dass** jedes Kodewort, das eine Auswahl von wenigstens zwei Basisvektoren kodiert, ferner ein Phasenverhältnis zwischen den ausgewählten Basisvektoren kodiert.

4. Verfahren nach einem der vorhergehenden Ansprüche, **dadurch gekennzeichnet, dass** in einem Frame 15 Bit Rückkopplungsinformation übertragen werden, und dass die fünfzehn Bit drei vollständige Kodewörter von je 4 Bit und wenigstens ein Aktualisierungsbit umfassen, das einen an der Basisstation zu aktualisierenden Wert eines Basisvektors beschreibt.

**5.** Verfahren nach einem der Ansprüche 1 bis 3, **dadurch gekennzeichnet, dass** in einem Frame 15 Bit Rückkopplungsinformation übertragen werden, und dass die fünfzehn Bit periodisch wechselnd drei vollständige Kodewörter von je 5 Bit bzw. zwei Kodewörter und fünf Aktualisierungsbits umfassen, die einen an der Basisstation zu aktualisierenden Wert eines Basisvektors beschreiben.

**6.** Verfahren nach Anspruch 3 und 4, **dadurch gekennzeichnet, dass** N=3, n=2 ist, die Kodewörter vier Bits $X_1$, $X_2$, $X_3$, $X_4$ umfassen, die jeweils die folgenden Auswahlen kodieren:

| Codewort $X_1$ $X_2$ $X_3$ $X_4$ | selektierter Basisvektor $B_x$ | selektierter Basisvektor $B_y$ | Phase $\varphi$ |
|---|---|---|---|
| 0 0 0 0 | | | |
| 0 0 1 0 | B1 | - | - |
| 0 1 0 0 | B2 | - | - |
| 1 0 0 0 | B3 | - | - |
| 1 1 0 0 | B2 | B3 | $\Psi$ |
| 1 1 0 1 | B2 | B3 | $\Psi+\pi/2$ |
| 1 1 1 1 | B2 | B3 | $\Psi+\pi$ |
| 1 1 1 0 | B2 | B3 | $\Psi-\pi/2$ |
| 1 0 0 1 | B1 | B3 | $\Psi$ |
| 1 0 1 1 | B1 | B3 | $\Psi+\pi/2$ |
| 1 0 1 0 | B1 | B3 | $\Psi+\pi$ |
| 0 0 1 1 | B1 | B3 | $\Psi-\pi/2$ |
| 0 1 0 1 | B1 | B2 | $\Psi$ |
| 0 1 1 1 | B1 | B2 | $\Psi+\pi/2$ |
| 0 1 1 0 | B1 | B2 | $\Psi+\pi$ |
| 0 0 0 1 | B1 | B2 | $\Psi-\pi/2$ |

wobei die Bits in einer beliebigen festen Reihenfolge übertragen werden, B1, B2, B3, jeweils einen der Basisvektoren bezeichnet und $\Psi$ ein beliebiger fester Wert ist.

**7.** Verfahren nach einem der Ansprüche 3 bis 5, **dadurch gekennzeichnet, dass** jedes Kodewort aus einem Auswahlabschnitt und einem Phasenabschnitt aufgebaut ist, wobei der Auswahlabschnitt die ausgewählten Vektoren und der Phasenabschnitt deren Phasenverhältnis kodiert.

**8.** Verfahren nach Anspruch 7, **dadurch gekennzeichnet, dass** die Zahl von Bits des Auswahlabschnitts kleiner als N ist.

**9.** Verfahren nach Anspruch 7 oder 8, **dadurch gekennzeichnet, dass** N=4, n=2 ist, die Auswahlabschnitte drei Bits $X_1$, $X_2$, $X_3$ umfassen, die jeweils die folgenden Auswahlen kodieren:

| Bits $X_1$ $X_2$ $X_3$ | selektierte Basis $B_x(m)$ | selektierte Basis $B_y(m)$ |
|---|---|---|
| 0 0 1 | B1 | B2 |
| 0 1 0 | B1 | B3 |
| 0 1 1 | B1 | B4 |
| 1 0 0 | B2 | B3 |
| 1 0 1 | B2 | B4 |

(fortgesetzt)

| Bits $X_1$ $X_2$ $X_3$ | selektierte Basis $B_x(m)$ | selektierte Basis $B_y(m)$ |
|---|---|---|
| 1 1 0 | B3 | B4 |

wobei B1, B2, B3, B4 jeweils einen der Basisvektoren bezeichnet und die Bits in einer beliebigen festen Reihenfolge übertragen werden.

10. Verfahren nach einem der Ansprüche 7 bis 9, **dadurch gekennzeichnet, dass** die Teilnehmerstation (MSk) einen bestimmten Wert des Auswahlabschnitts ($X_1$, $X_2$, $X_3$) überträgt, um die Auswahl eines einzelnen Basisvektors anzukündigen, und dass der Wert des Phasenabschnitts ($X_4$, $X_5$) den ausgewählten einzelnen Basisvektor spezifiziert.

11. Verfahren nach einem der Ansprüche 7 bis 10, **dadurch gekennzeichnet, dass** wenigstens ein bestimmter Wert des Auswahlabschnitts ($X_1$, $X_2$, $X_3$) verwendet wird, um der Basisstation (BS) zu signalisieren, dass eine bei einer früheren Übertragung ausgewählte Linearkombination oder ein bei einer früheren Übertragung ausgewählter Basisvektor erneut als Gewichtungsvektor verwendet werden soll.

12. Verfahren nach Anspruch 10 oder 11, **dadurch gekennzeichnet, dass** der wenigstens eine bestimmte Wert des Auswahlabschnitts "000" oder "111" ist.

13. Verfahren nach Anspruch 11 oder 12, **dadurch gekennzeichnet, dass** der Wert des Phasenabschnitts ($X_4$, $X_5$) verwendet wird, um der Basisstation (BS) zu signalisieren, welche Linearkombination bzw. welcher Basisvektor aus einer Mehrzahl von bei früheren Übertragungen ausgewählten Linearkombinationen erneut verwendet werden soll.

14. Verfahren nach einem der Ansprüche 11 bis 13, **dadurch gekennzeichnet, dass** der Phasenabschnitt ($X_4$, $X_5$) zwei Bit umfasst, und dass mit jedem übertragenen Bit des Phasenabschnitts ($X_4$, $X_5$) eine Auswahl zwischen zwei auswählbaren bei früheren Übertragungen ausgewählten Linearkombinationen bzw. Basisvektoren an die Basisstation (BS) übermittelt wird.

15. Verfahren nach Anspruch 14, **dadurch gekennzeichnet, dass** die Bits des Phasenabschnitts ($X_4$, $X_5$) mit den Bits des Auswahlabschnitts ($X_1$, $X_2$, $X_3$) verschachtelt übertragen werden.

16. Verfahren nach Anspruch 1, **dadurch gekennzeichnet, dass** der Satz von Basisvektoren zwei Basisvektoren umfasst, und dass mit jedem übertragenen Kodewort beide Basisvektoren in einem durch das Kodewort definierten Phasenverhältnis ausgewählt werden.

17. Verfahren nach einem der vorhergehenden Ansprüche, **dadurch gekennzeichnet, dass** die Kodewörter ferner einen Amplitudenabschnitt (A) umfassen, der das Amplitudenverhältnis der ausgewählten Basisvektoren definiert.

18. Verfahren nach Anspruch 17, **dadurch gekennzeichnet, dass** der Amplitudenabschnitt (A) für je zwei ausgewählte Vektoren je ein Bit umfasst, dessen Wert angibt, ob die Amplitude eines ersten der zwei Vektoren das $\alpha$-fache oder das 1/a-fache der Amplitude des zweiten ist.

19. Teilnehmerstation für ein Funk-Kommunikationssystem, die eingerichtet ist, anhand eines von einer Basisstation empfangenen Funksignals eine von der Basisstation als Gewichtungsvektor zur Formung eines an die Teilnehmerstation gesendeten Strahls zu verwendende Linearkombination von Basisvektoren zu bestimmen und ein dieser Linearkombination zugeordnetes Kodewort als Rückkopplungsinformation an die Basisstation zu übertragen, **dadurch gekennzeichnet, dass** das Format der Kodewörter so festgelegt ist, dass zwei Kodewörter, von denen zumindest eines eine Auswahl mit mindestens zwei Basisvektoren umfasst und die sich in nicht mehr als einem Bit unterscheiden, zwei Auswahlen kodieren, die sich in nicht mehr als einem ausgewählten Basisvektor unterscheiden.

20. Basisstation für ein Funk-Kommunikationssystem, die eine Antenneneinrichtung (AE) mit mehreren Antennenelementen ($AE_1$ bis $AE_M$) aufweist, welche ein Downlinksignal jeweils gewichtet mit Komponenten ($w_i$, i=1, ..., M) eines aktuellen Gewichtungsvektors $\mathbf{w} = (w_1\ w_2\ ...\ w_M)^T$ an eine Teilnehmerstation (MSk) abstrahlen, wobei die Basisstation eingerichtet ist, eine von einer Teilnehmerstation durch ein Kodewort einer Rückkopplungsinformation ausgewählte Kombination von Basisvektoren zu dem aktuellen Gewichtungsvektor zur Formung eines an die Teilnehmerstation gesendeten Strahls linear zu kombinieren, **dadurch gekennzeichnet, dass** das Format der Kodewörter so festgelegt ist, dass zwei Kodewörter, von denen zumindest eines eine Auswahl mit mindestens zwei Basisvektoren umfasst und die sich in nicht mehr als einem Bit unterscheiden, zwei Auswahlen kodieren, die sich in nicht mehr als einem ausgewählten Basisvektor unterscheiden.

**Claims**

1.  Method for transmitting feedback information for beam forming in a radio communication system comprising subscriber stations (MSk, MS1, MS2,...) and a base station (BS) which has an antenna device (AE) having a plurality of antenna elements ($AE_1$ to $AE_M$) which radiate a downlink signal weighted in each case with components ($w_i$, i=1, ..., M) of a current weighting vector $w = (w_i\ w_2\ ...\ w_M)^T$ to a subscriber station (MSk), the subscriber station (MSk) making a selection from a set of base vectors, transmitting a code word with a predefined number of bits to the base station, said code word defining the selection made, and the base station generating the current weighting vector as a linear combination of the selected base vectors, **characterised in that** the code words are assigned to the possible selections in such a way that two code words, at least one of which comprises a selection containing at least two base vectors and which do not differ in more than one bit, code two selections which do not differ in more than one selected base vector.

2.  Method according to claim 1, **characterised in that** the set of base vectors comprises N base vectors, where $N \geq 3$, and that the code words in each case code a selection of at least n base vectors, where $n < N$.

3.  Method according to claim 1 or 2, **characterised in that** each code word which codes a selection of at least two base vectors also codes a phase relation between the selected base vectors.

4.  Method according to one of the preceding claims, **characterised in that** 15 bits of feedback information are transmitted in one frame and that the fifteen bits comprise three full code words, each 4 bits in length, and at least one update bit which describes a base vector value that is to be updated at the base station.

5.  Method according to one of claims 1 to 3, **characterised in that** 15 bits of feedback information are transmitted in one frame and that the fifteen bits comprise, in periodic alternation, three full code words, each 5 bits in length, or, as the case may be, two code words and five update bits which describe a base vector value that is to be updated at the base station.

6.  Method according to claim 3 and 4, **characterised in that** N=3, n=2, the code words comprise 4 bits $X_1$, $X_2$, $X_3$, $X_4$ which in each case code the following selections:

| Code word $X_1 X_2 X_3 X_4$ | Selected base vector $B_x$ | Selected base vector $B_y$ | Phase $\varphi$ |
|---|---|---|---|
| 0 0 0 0 | | | |
| 0 0 1 0 | B1 | - | - |
| 0 1 0 0 | B2 | - | - |
| 1 0 0 0 | B3 | - | - |
| 1 1 0 0 | B2 | B3 | $\Psi$ |
| 1 1 0 1 | B2 | B3 | $\Psi+\pi/2$ |
| 1 1 1 1 | B2 | B3 | $\Psi+\pi$ |
| 1 1 1 0 | B2 | B3 | $\Psi-\pi/2$ |
| 1 0 0 1 | B1 | B3 | $\Psi$ |
| 1 0 1 1 | B1 | B3 | $\Psi+\pi/2$ |
| 1 0 1 0 | B1 | B3 | $\Psi+\pi$ |
| 0 0 1 1 | B1 | B3 | $\Psi-\pi/2$ |
| 0 1 0 1 | B1 | B2 | $\Psi$ |

(continued)

| Code word $X_1 X_2 X_3 X_4$ | Selected base vector $B_x$ | Selected base vector $B_y$ | Phase $\varphi$ |
|---|---|---|---|
| 0 1 1 1 | B1 | B2 | $\Psi+\pi/2$ |
| 0 1 1 0 | B1 | B2 | $\Psi+\pi$ |
| 0 0 0 1 | B1 | B2 | $\Psi-\pi/2$ |

where the bits are transmitted in an arbitrary fixed order, each of B1, B2, B3 designates one of the base vectors and $\Psi$ is an arbitrary fixed value.

7. Method according to one of claims 3 to 5, **characterised in that** each code word is made up of a selection section and a phase section, the selection section coding the selected vectors and the phase section their phase relation.

8. Method according to claim 7, **characterised in that** the number of bits in the selection section is less than N.

9. Method according to claim 7 or 8, **characterised in that** N=4, n=2, and the selection sections comprise three bits $X_1$, $X_2$, $X_3$, each of which codes the following selections:

| Bits $X_1 X_2 X_3 X_4$ | Selected base $B_x(m)$ | Selected base $B_y(m)$ |
|---|---|---|
| 0 0 1 | B1 | B2 |
| 0 1 0 | B1 | B3 |
| 0 1 1 | B1 | B4 |
| 1 0 0 | B2 | B3 |
| 1 0 1 | B2 | B4 |
| 1 1 0 | B3 | B4 |

where each of B1, B2, B3, B4 designates one of the base vectors and the bits are transmitted in an arbitrary fixed order.

10. Method according to one of claims 7 to 9, **characterised in that** the subscriber station (MSk) transmits a specific value of the selection section ($X_1$, $X_2$, $X_3$) in order to announce the selection of an individual base vector and that the value of the phase section ($X_4$, $X_5$) specifies the selected individual base vector.

11. Method according to one of claims 7 to 10, **characterised in that** at least one specific value of the selection section ($X_1$, $X_2$, $X_3$) is used in order to signal to the base station (BS) that a linear combination selected during a previous transmission or a base vector selected during a previous transmission is to be reused as a weighting vector.

12. Method according to claim 10 or 11, **characterised in that** the at least one specific value of the selection section is "000" or "111".

13. Method according to claim 11 or 12, **characterised in that** the value of the phase section ($X_4$, $X_5$) is used in order to signal to the base station (BS) which linear combination or, as the case may be, which base vector from a plurality of linear combinations selected during previous transmissions is to be reused.

14. Method according to one of claims 11 to 13, **characterised in that** the phase section ($X_4$, $X_5$) comprises two bits and that with each transmitted bit of the phase section ($X_4$, $X_5$) a selection between two selectable linear combinations or, as the case may be, base vectors selected during previous transmissions is transmitted to the base station (BS).

15. Method according to claim 14, **characterised in that** the bits of the phase section ($X_4$, $X_5$) are transmitted nested with the bits of the selection section ($X_1$, $X_2$, $X_3$).

16. Method according to claim 1, **characterised in that** the set of base vectors comprises two base vectors and that with each transmitted code word both base vectors are selected in a phase relation defined by means of the code word.

**17.** Method according to one of the preceding claims, **characterised in that** the code words also comprise an amplitude section (A) which defines the amplitude relation of the selected base vectors.

**18.** Method according to claim 17, **characterised in that** the amplitude section (A) for each two selected vectors in each case comprises one bit whose value indicates whether the amplitude of a first of the two vectors is a times or 1/a times the amplitude of the second.

**19.** Subscriber station for a radio communication system, which subscriber station is set up to determine, on the basis of a radio signal received from a base station, a linear combination of base vectors to be used by the base station as a weighting factor for forming a beam transmitted to the subscriber station and to transmit a code word assigned to said linear combination as feedback information to the base station, **characterised in that** the format of the code words is specified in such a way that two code words, at least one of which comprises a selection containing at least two base vectors and which do not differ in more than one bit, code two selections which do not differ in more than one selected base vector.

**20.** Base station for a radio communication system, which base station has an antenna device (AE) having a plurality of antenna elements ($AE_1$ to $AE_M$) which radiate a downlink signal weighted in each case with components ($w_i$, i=1, ..., M) of a current weighting vector w = ($w_i$ $w_2$ ... $w_M$)$^T$ to a subscriber station (MSk), the base station being set up to combine in a linear manner a combination, selected by a subscriber station by means of a code word of feedback information, of base vectors into the current weighting vector for the purpose of forming a beam transmitted to the subscriber station, **characterised in that** the format of the code words is specified in such a way that two code words, at least one of which comprises a selection containing at least two base vectors and which do not differ in more than one bit, code two selections which do not differ in more than one selected base vector.

**Revendications**

**1.** Procédé de transmission d'information de rétroaction pour la formation de faisceau dans un système de radiocommunication comprenant des stations d'abonnés (MSk, MS1, MS2, ...) et une station de base (BS) qui comporte un dispositif d'antenne (AE) avec plusieurs éléments d'antenne ($AE_1$ à $AE_m$) qui rayonnent un signal descendant respectivement pondéré avec des composantes ($w_i$, i = 1, ..., M) d'un vecteur de pondération actuel w = ($w_1$ $w_2$ ... $w_M$)$^T$ vers une station d'abonné (MSk), la station d'abonné (MSk) opérant une sélection à partir d'un jeu de vecteurs de base, transmettant un mot de code avec un nombre donné de bits à la station de base, lequel définit la sélection opérée, et la station de base générant le vecteur de pondération actuel en tant que combinaison linéaire des vecteurs de base sélectionnés, **caractérisé en ce que** les mots de code sont affectés de manière telle aux sélections possibles que deux mots de code, dont au moins l'un comprend une sélection avec au moins deux vecteurs de base et qui diffèrent en pas plus d'un bit, codent deux sélections qui diffèrent en pas plus d'un vecteur de base sélectionné.

**2.** Procédé selon la revendication 1, **caractérisé en ce que** le jeu de vecteurs de base comprend N vecteurs de base, avec N ≥ 3, et **en ce que** les mots de code codent respectivement une sélection de n vecteurs de base, avec n < N.

**3.** Procédé selon la revendication 1 ou 2, **caractérisé en ce que** chaque mot de code qui code une sélection d'au moins deux vecteurs de base code en outre une relation de phase entre les vecteurs de base sélectionnés.

**4.** Procédé selon l'une des revendications précédentes, **caractérisé en ce que** 15 bits d'information de rétroaction sont transmis dans une trame et **en ce que** les quinze bits comprennent trois mots de code complets de 4 bits chacun et au moins un bit d'actualisation qui décrit une valeur d'un vecteur de base à actualiser au niveau de la station de base.

**5.** Procédé selon l'une des revendications 1 à 3, **caractérisé en ce que** 15 bits d'information de rétroaction sont transmis dans une trame et **en ce que** les quinze bits comprennent, en alternance périodique, trois mots de code complets de 5 bits chacun resp. deux mots de code et cinq bits d'actualisation qui décrivent une valeur d'un vecteur de base à actualiser au niveau de la station de base.

**6.** Procédé selon la revendication 3 et 4, **caractérisé en ce que** N = 3, n = 2, les mots de code comprennent quatre bits $X_1$, $X_2$, $X_3$, $X_4$ qui codent respectivement les sélections suivantes:

| mot de code $X_1 X_2 X_3 X_4$ | vecteur de base sélectionné $B_x$ | vecteur de base sélectionné $B_y$ | phase $\varphi$ |
|---|---|---|---|
| 0 0 0 0 | | | |
| 0 0 1 0 | B1 | - | - |
| 0 1 0 0 | B2 | - | - |
| 1 0 0 0 | B3 | - | - |
| 1 1 0 0 | B2 | B3 | $\psi$ |
| 1 1 0 1 | B2 | B3 | $\psi + \pi/2$ |
| 1 1 1 1 | B2 | B3 | $\psi + \pi$ |
| 1 1 1 0 | B2 | B3 | $\psi - \pi/2$ |
| 1 0 0 1 | B1 | B3 | $\psi$ |
| 1 0 1 1 | B1 | B3 | $\psi + \pi/2$ |
| 1 0 1 0 | B1 | B3 | $\psi + \pi$ |
| 0 0 1 1 | B1 | B3 | $\psi - \pi/2$ |
| 0 1 0 1 | B1 | B2 | $\psi$ |
| 0 1 1 1 | B1 | B2 | $\psi + \pi/2$ |
| 0 1 1 0 | B1 | B2 | $\psi + \pi$ |
| 0 0 0 1 | B1 | B2 | $\psi - \pi/2$ |

les bits étant transmis dans un ordre fixe quelconque, B1, B2, B3 désignant respectivement l'un des vecteurs de base et $\psi$ étant une valeur fixe quelconque.

7. Procédé selon l'une des revendications 3 à 5, **caractérisé en ce que** chaque mot de code est construit à partir d'un segment de sélection et d'un segment de phase, le segment de sélection codant les vecteurs sélectionnés et le segment de phase, leur relation de phase.

8. Procédé selon la revendication 7, **caractérisé en ce que** le nombre de bits du segment de sélection est inférieur à N.

9. Procédé selon la revendication 7 ou 8, **caractérise en ce que** N = 4, n = 2, les segments de sélection comprennent trois bits $X_1$, $X_2$, $X_3$ qui codent respectivement les sélections suivantes:

| bits $X_1 X_2 X_3$ | base sélectionnée $B_x(m)$ | base sélectionnée $B_y(m)$ |
|---|---|---|
| 0 0 1 | B1 | B2 |
| 0 1 0 | B1 | B3 |
| 0 1 1 | B1 | B4 |
| 1 0 0 | B2 | B3 |
| 1 0 1 | B2 | B4 |
| 1 1 0 | B3 | B4 |

B1, B2, B3, B4 désignant respectivement l'un des vecteurs de base et les bits étant transmis dans un ordre fixe quelconque.

10. Procédé selon l'une des revendications 7 à 9, **caractérisé en ce que** la station d'abonné (MSk) transmet une valeur déterminée du segment de sélection ($X_1$, $X_2$, $X_3$) pour annoncer la sélection d'un vecteur de base individuel et **en ce que** la valeur du segment de phase ($X_4$, $X_5$) spécifie le vecteur de base individuel sélectionné.

**11.** Procédé selon l'une des revendications 7 à 10, **caractérisé en ce qu'**au moins une valeur déterminée du segment de sélection ($X_1$, $X_2$, $X_3$) est utilisée pour signaler à la station de base (BS) qu'une combinaison linéaire sélectionnée lors d'une transmission antérieure ou un vecteur de base sélectionné lors d'une transmission antérieure doivent de nouveau être utilisés en tant que vecteur de pondération.

**12.** Procédé selon la revendication 10 ou 11, **caractérisé en ce que** l'au moins une valeur déterminée du segment de sélection est «000» ou «111».

**13.** Procédé selon la revendication 11 ou 12, **caractérisé en ce que** la valeur du segment de phase ($X_4$, $X_5$) est utilisée pour signaler à la station de base (BS) quelle combinaison linéaire resp. quel vecteur de base d'une pluralité de combinaisons linéaires sélectionnées lors de transmissions antérieures doivent de nouveau être utilisés.

**14.** Procédé selon l'une des revendications 11 à 13, **caractérisé en ce que** le segment de phase ($X_4$, $X_5$) comprend deux bits et **en ce qu'**est transmise à la station de base (BS), avec chaque bit transmis du segment de phase ($X_4$, $X_5$), une sélection entre deux combinaisons linéaires resp. vecteurs de base sélectionnables, sélectionnés lors de transmissions antérieures.

**15.** Procédé selon la revendication 14, **caractérisé en ce que** les bits du segment de phase ($X_4$, $X_5$) sont transmis de manière entrelacée avec les bits du segment de sélection ($X_1$, $X_2$, $X_3$).

**16.** Procédé selon la revendication 1, **caractérisé en ce que** le jeu de vecteurs de base comprend deux vecteurs de base et **en ce que**, avec chaque mot de code transmis, les deux vecteurs de base sont sélectionnés dans une relation de phase définie par le mot de code.

**17.** Procédé selon l'une des revendications précédentes, **caractérisé en ce que** les mots de code comprennent en outre un segment d'amplitude (A) qui définit la relation d'amplitude des vecteurs de base sélectionnés.

**18.** Procédé selon la revendication 17, **caractérisé en ce que** le segment d'amplitude (A) comprend, pour respectivement deux vecteurs sélectionnés, respectivement un bit dont la valeur indique si l'amplitude d'un premier des deux vecteurs est a fois ou 1/a fois l'amplitude du deuxième.

**19.** Station d'abonné pour un système de radiocommunication, aménagée pour déterminer, à l'aide d'un signal radio reçu d'une station de base, une combinaison linéaire de vecteurs de base à utiliser pour la formation d'un faisceau envoyé à la station d'abonné et pour transmettre à la station de base, en tant qu'information de rétroaction, un mot de code affecté à cette combinaison linéaire, **caractérisée en ce que** le format des mots de code est déterminé de manière telle que deux mots de code, dont au moins l'un comprend une sélection avec au moins deux vecteurs de base et qui diffèrent en pas plus d'un bit, codent deux sélections qui diffèrent en pas plus d'un vecteur de base sélectionné.

**20.** Station de base pour un système de radiocommunication, laquelle comporte un dispositif d'antenne (AE) avec plusieurs éléments d'antenne ($AE_1$ à $AE_m$) qui rayonnent un signal descendant respectivement pondéré avec des composantes ($w_i$, i = 1, ..., M) d'un vecteur de pondération actuel $w = (w_1\ w_2\ ...\ w_M)^T$ vers une station d'abonné (MSk), la station de base étant aménagée pour combiner linéairement une combinaison de vecteurs de base sélectionnée par une station d'abonné par un mot de code d'une information de rétroaction, pour obtenir le vecteur de pondération actuel pour former un faisceau envoyé à la station d'abonné, **caractérisée en ce que** le format des mots de code est déterminé de manière telle que deux mots de code, dont au moins un comprend une sélection avec au moins deux vecteurs de base et qui diffèrent en pas plus d'un bit, codent deux sélections qui diffèrent en pas plus d'un vecteur de base sélectionné.

# Fig.1

(Stand der Technik)

# Fig.2

## Fig.3

## Fig.4

## Fig.5

## Fig.6

| $X_1$ | $X_2$ | $X_3$ | $X_4$ | $X_5$ | $X_1$ | $X_2$ | $X_3$ | $X_4$ | $X_5$ | $X_1$ | $X_2$ | $X_3$ | $X_4$ | $X_5$ |

| $X_1$ | $X_2$ | $X_3$ | $X_4$ | $X_5$ | $X_1$ | $X_2$ | $X_3$ | $X_4$ | $X_5$ | P | P | P | P | P |

## Fig.7

| $X_1$ | $X_2$ | $X_4$ | $X_3$ | $X_5$ | $X_1$ | $X_2$ | $X_4$ | $X_3$ | $X_5$ | $X_1$ | $X_2$ | $X_4$ | $X_3$ | $X_5$ |

## Fig.8

| $\Phi_1$ | $\Phi_2$ | A | $\Phi_1$ | $\Phi_2$ | A | $\Phi_1$ | $\Phi_2$ | A | $\Phi_1$ | $\Phi_2$ | A | $\Phi_1$ | $\Phi_2$ | A |